# EUROPEAN PATENT APPLICATION

(11) **EP 1 860 283 A2**
(43) Date of publication of application: **28.11.2007**
(21) Application number: 07251769.1
(22) Date of filing: 26.04.2007
(51) Int. Cl.: F01D 21/04

(54) **Fan casing for a gas turbine engine**

(30) Priority: 24.05.2006 GB 0610271
(71) Applicant: Rolls-Royce plc, London SW1E 6AT (GB)
(72) Inventor: Harper, Cedric Brett, Derby, DE3 5YA (GB); Martindale, Ian Graham, Ashbourne, Derbyshire, DE6 5JA (GB)
(74) Representative: Gunn, Michael Alan

(57) **Abstract**

An annular fan casing of a gas turbine engine includes a plurality of fan track liner panels, secured to the radially inner surface of the fan casing. The panels are secured using mechanical fasteners, which are secured into non-load-bearing regions of the fan casing so as not to compromise the load-carrying or containment functions of the fan casing.

## Description

This invention relates to gas turbine engines, and more particularly to fan casings for such engines.

Turbofan gas turbine engines for powering aircraft conventionally comprise a core engine, which drives a fan. The fan comprises a number of radially extending fan blades mounted on a fan rotor, enclosed by a generally cylindrical or frustoconical fan casing. The core engine comprises one or more turbines, each one of which comprises a number of radially extending turbine blades, enclosed by a generally cylindrical or frustoconical casing.

There is a remote possibility with such engines that part or all of a fan blade or a turbine blade could become detached from the remainder of the fan or turbine. In the case of a fan blade becoming detached this may occur as a result of, for example, the turbofan gas turbine engine ingesting a bird or other foreign object.

The use of containment rings for turbofan gas turbine engine casings is well known. It is known to provide generally cylindrical or frustoconical, relatively thick, metallic containment rings. It is also known to provide generally cylindrical or frustoconical, locally thickened, isogrid metallic containment rings. Furthermore, it is known to provide strong fibrous material wound around relatively thin metallic casings or around the above-mentioned containment casings. In the event that a blade becomes detached it passes through the casing and is contained by the fibrous material.

There is a requirement to provide a fan track liner within the fan casing. Conventionally the fan track liner is attached within the fan casing by mechanical fasteners passing through the liner and secured into or through the fan casing, or by adhesive.

Conventional mechanical attachment of fan track liners uses fasteners extending radially through reinforced regions of the liner panel. These fasteners produce steps and gaps, which interfere with the aerodynamic flow over the liner panel. The presence of the reinforced regions increases the weight and cost of the liner panels. Furthermore, the fasteners must be secured into or through the fan casing, which weakens the casing and may interfere with its ability to contain a detached fan blade.

Adhesive bonding of the fan track liner to the fan casing must be performed under controlled conditions. If a liner has to be replaced in service it may be difficult to control the bonding conditions, and this can result in unsatisfactory attachment of the liner to the casing. It can be difficult to remove a damaged liner without also damaging the fan casing. The design of fan casings has to include an allowance for possible weakening caused by such damage. This increases the cost and weight of the fan casing.

Accordingly, this invention seeks to provide a novel fan track liner for a gas turbine engine which overcomes the above-mentioned problems.

The invention will be more fully described, by way of example, with reference to the following drawings in which:
Figure 1 is a section through a fan case assembly of known type;
Figure 2 is a section through the forward part of a fan case assembly according to the invention;
Figure 3 is an enlarged view of the part of the fan case assembly identified by the arrow III in Figure 2;
Figure 4 is an enlarged view of the part of the fan case assembly identified by the arrow IV in Figure 2;
Figure 5 shows an alternative embodiment of the arrangement shown in Figure 4;
Figure 6 shows an alternative embodiment of the arrangement at the forward end of the fan case assembly of Figure 2;
Figure 7 shows a further alternative embodiment of the arrangement at the forward end of the fan case assembly of Figure 2;
Figure 8 is a perspective view of the liner panel of Figure 7, viewed approximately along the arrow VIII in Figure 7;
Figure 9 is a section through the forward part of a fan case assembly according to the invention, showing a further alternative embodiment;
Figure 10 is another view of the arrangement of Figure 9, viewed along the arrow X in Figure 9;
Figure 11 is a sectional view on the line XI-XI in Figure 10;
Figure 12 shows an alternative embodiment of the arrangement at the forward end of the fan case assembly of Figure 9;
Figure 13 is a view of the arrangement of Figure 12, along the line XIII in Figure 12.

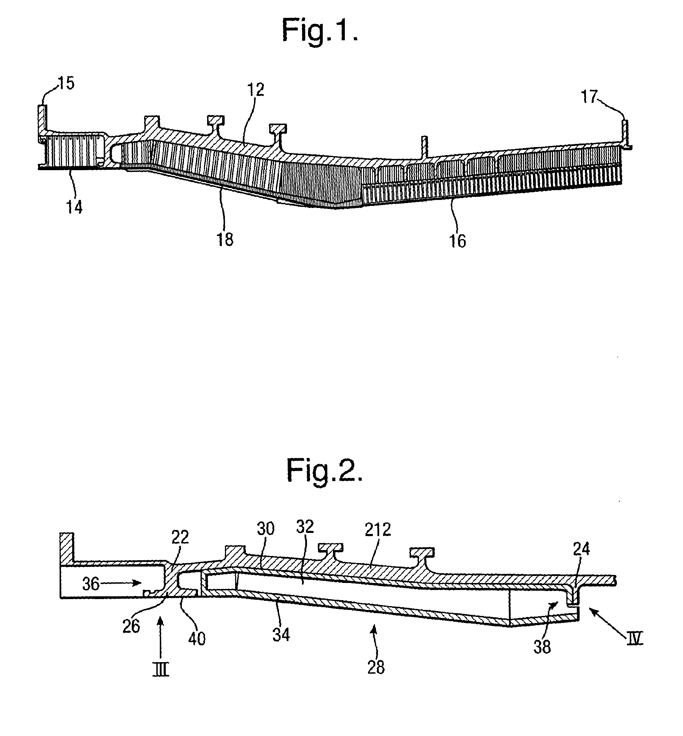

Figure 1 shows a partial section through a fan case assembly of known type in a gas turbine engine. The annular fan case 112 is generally cylindrical or frustoconical in shape. It has a forward flange 15 and a rearward flange 17, attached to further structure of the gas turbine engine, which is not shown. These flanges 15 and 17, and the annulus of the fan case 112 between them, provide a load path through which mechanical loads may be transmitted during the operation of the gas turbine engine. Within the annular fan case 112 are secured front acoustic panels 14, rear acoustic panels 16 and fan track liner panels 18. The panels are formed in segments, so that a number of panels are butted together to form a complete ring around the inner surface of the fan case 112. All of the panels are attached to the fan case 112 using adhesive.

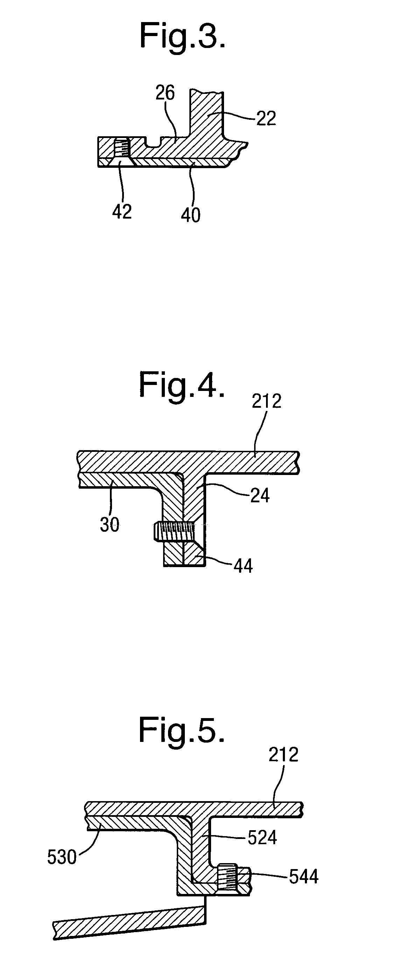

Figure 2 shows the forward part of a fan case arrangement according to the invention. The front and rear acoustic panels are omitted for clarity. The fan case 212 has two ribs 22 and 24 which extend around the circumference. The forward rib 22 is enlarged, at its radially-inner end, to form a foot 26 extending axially forward and rearward. The fan track liner 28 comprises an injection moulded liner tray 30. At its forward end the liner tray 30 has an extension 40. Bonded within this tray 30 is a honeycomb panel 32, and attrition liners 34 are in turn bonded to the honeycomb panel 32. The liner tray 30 extends around 20° of the circumference, so that a full set of fan track liner panels 28 consists of eighteen panels. Each liner panel 28 is secured to the fan case 212 at two axial positions, indicated by the lines 36 and 38. These areas are shown in more detail in Figures 3 and 4.

Figure 3 shows the extended foot 26 of the forward rib 22. The liner tray extension 40 is secured to the foot 26 by a countersunk screw 42. In this embodiment, each liner panel 28 has three screws 42 spaced circumferentially.

Figure 4 shows the rearward rib 24 of the fan case 212. The rear part of the liner tray 30 is secured to the rib 24 by a countersunk screw 44. In this embodiment, each liner panel 28 has three screws 44 spaced circumferentially.

A layer of polysulphide sealant is applied to the outer surface of the liner tray 30. This prevents frettage between the liner tray and the fan casing 212 and damps vibration, and will also help to prevent rotation of the liner panels around the casing 212, in case of heavy rubbing of the fan blade tips on the attrition liner 34.

Figure 5 shows an alternative arrangement of the rearward rib 24. In this embodiment, the rib 524 is L-shaped, and so is the rearward part of the liner tray 530. The countersunk screw 544 secures the liner tray 530 to the rib 524.

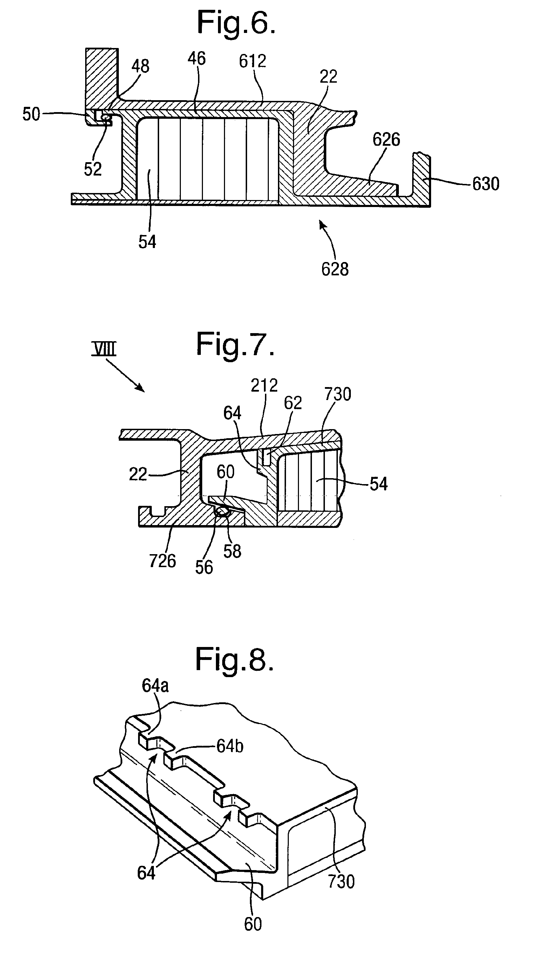

Figure 6 shows an alternative embodiment of the fan casing arrangement, in which the front acoustic panel (FAP) is incorporated into the fan track liner panel. The forward rib 22 can be seen, as in Figure 2, with a foot 626. The liner tray 630 is extended forward, to form a second tray 46. The front acoustic panel honeycomb 54 is bonded into the second tray 46. A hook 48 is formed at the forward extremity of the tray 46. The liner panel 628 therefore incorporates both the FAP and the fan track liner. A clip 50 secures the hook 48, and thereby the liner panel 628, to the fan casing 612. An O-ring seal 52 provides better location of the hook 48 and prevents vibration. The rearward end of the liner tray 630 is secured by screws, as in previous embodiments.

The same means of securing the forward part of the liner panel may be applied to the embodiment of Figure 2. Figure 7 illustrates such an embodiment. The fan casing 212 and the forward rib 22 are as in Figure 2. The foot 726 has a groove 56 on its rearward part, to accommodate an O-ring seal 58. The liner tray 730 has a part-annular hook 60 formed at its forward end, and this engages with the O-ring seal 58 to provide a radial location of the liner panel 28 within the fan casing 212. Also, in this embodiment, a number of anti-rotation features 62 are provided within the fan casing 212. These features 62 take the form of pegs, extending radially inwardly from the casing 212 and equally spaced around its circumference. The front portion of the liner tray 730 is provided with corresponding recesses 64 (more clearly visible in Figure 8). In use, each anti-rotation feature 62 locates between respective sides 64a, 64b of a recess 64, so as to prevent the liner panel 28 from moving in a circumferential direction, for example during heavy fan blade rubs.

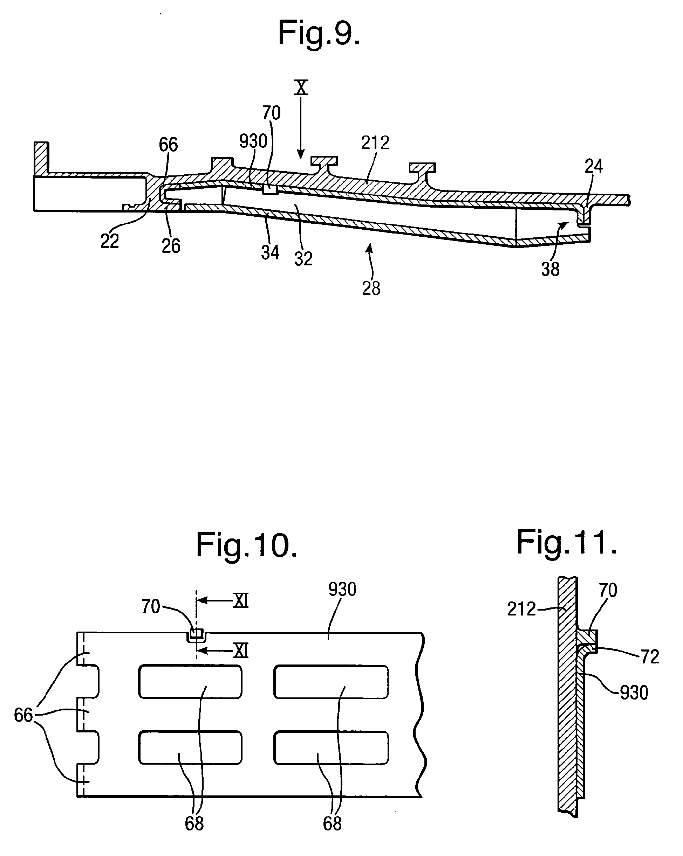

Figure 9 shows another embodiment of the arrangement of Figure 2, with a further alternative attachment for the forward part of the liner panel. The arrangement of the fan casing 212 is substantially as in Figure 2, with forward and rearward ribs 22, 24. The forward rib has an enlarged foot 26. The liner tray 930 is formed of pressed metal. As in previous embodiments, a honeycomb panel 32 is bonded within the liner tray 930, and an attrition liner 34 is bonded to the honeycomb panel 32. The forward part of the liner tray 930 is castellated to form hooks 66, which locate inside the foot 26 of the forward rib 22 to provide a radial location. Figure 10 is a view along the arrow X in Figure 9. The hooks 66 are visible at the forward end of the liner tray 930. In this embodiment, each liner tray 930 has three hooks 66. The rearward part of the liner tray 930 is fastened in the same manner as in Figure 2. Also visible in Figure 10 are four cutouts 68, which reduce the weight of the liner tray 930.

Referring still to Figure 10 and also to Figure 11 (which is a view on the line XI-XI in Figure 10), anti-rotation features 70 are also provided within the fan casing 212. These consist of pegs extending radially inwardly from the casing 212 and equally spaced around its circumference. At an appropriate position on each liner tray 930, a tang 72 is formed by bending a portion of the edge of the liner tray 930. In use, the tang engages with a corresponding peg 70 to prevent rotation of the liner tray.

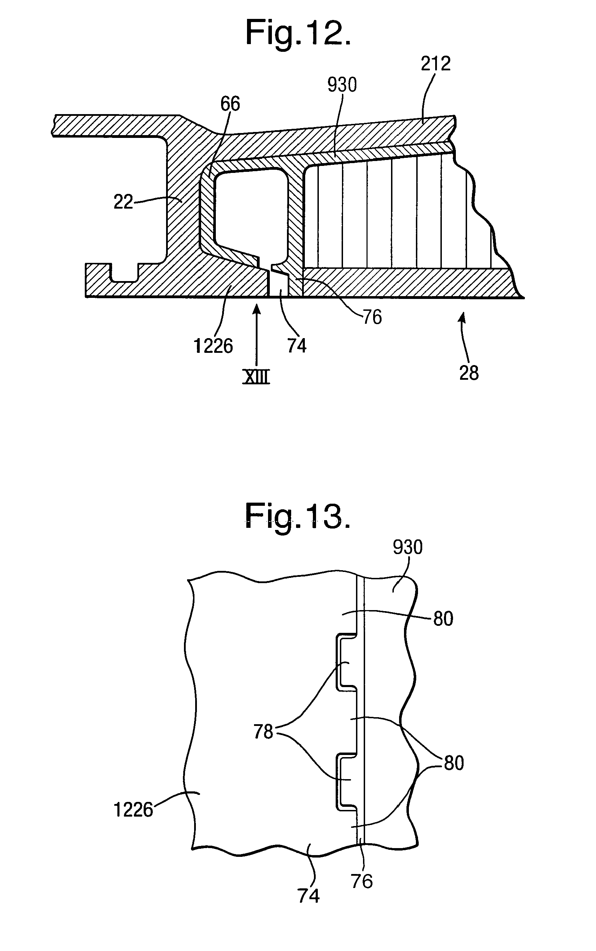

Figure 12 shows an alternative mounting arrangement for the forward end of the liner panel 28, in the embodiment of Figure 9. Hooks 66 provide a radial location for the liner panel, as described above. The anti-rotation features in this arrangement take the form of interlocking castellations. These are more clearly visible in Figure 13, which is a view on the arrow XIII in Figure 12. Castellations are formed on the rearward part 74 of the enlarged foot 1226, and on the forward part 76 of the liner tray 930. In use, castellations 78 on the liner tray 930 engage with corresponding castellations 80 on the foot 1226, preventing rotation of the liner panel 28.

Although particular embodiments of the invention have been described, it will be apparent to a skilled person that various changes and modifications can be made without departing from the spirit of the invention. Some examples of possible changes and modifications are set out below, though these are not intended to be exhaustive.

The liner tray 30 may be pressed metal, or composite, or laser cut from metal sheet.

The liner tray 30 may extend around any convenient arc of the circumference, so that a full set of fan track liner panels 28 consists of fewer or more panels than are described in the embodiments above. It is envisaged that the minimum arc for each panel 28 would be of the order of 10° (a full set consisting of 36 panels), and the maximum arc would be of the order of 90° (a full set consisting of four panels).

The numbers of screws (42, 44), hooks (48, 66) and anti-rotation features (62, 70, 78) provided on each panel 28 may be any suitable number.

The O-ring seal 52, 58 may be replaced by a seal of another type, or may be dispensed with altogether.

The polysulphide sealant may be replaced by an equivalent sealant of different chemical composition.

The locating recesses 64 may be machined or moulded, according to the material from which the liner tray 730 is made, and may be of a different shape from that shown in Figure 8.

A different number of cutouts 68 may be provided, and they may be of a different shape from that described. Cutouts may also be provided in the liner trays of the other embodiments described. Likewise, the different types of anti-rotation features described in the several embodiments may be freely interchanged between those embodiments.

## Claims

1. A casing (212) for a gas turbine engine, the casing comprising a generally cylindrical or frustoconical annulus, at least one liner panel (28) being positioned radially inward of the casing, the or each liner panel being removably securable on the casing by at least one mechanical fastener (42,44) which in use passes through the liner panel, **characterised in that** the or each mechanical fastener is not secured to the annulus of the casing.

2. A casing as in claim 1, in which the annulus has a first flange (15) and a second flange (17) axially spaced apart, and in which in use the annulus provides a load path at least between the first flange and the second flange.

3. A casing as in claim 2, in which the or each mechanical fastener is not secured to the annulus of the casing between the first flange and the second flange.

4. A casing as in any preceding claim, in which the annulus forms part of a containment system.

5. A casing as in any preceding claim, in which the casing further comprises a member extending generally radially inwards from the annulus, and in which in use at least one mechanical fastener is secured to the member.

6. A casing as in any of claims 1 to 4, in which the casing further comprises a first member (22) and a second member (24) each extending generally radially inwards from the annulus, the first and second members being axially spaced apart.

7. A casing as in claim 6, in which in use at least one mechanical fastener is secured to at least one of the first and second members.

8. A casing as in claim 6, in which the or each liner panel comprises at least one hook (48), and in which in use at least one mechanical fastener is secured to either the first or the second member, and the hook or hooks engage with the other of the first and second members.

9. A casing as in claim 8, in which a seal (52) is provided between the hook or hooks and the member with which the hook or hooks engage.

10. A casing as in claim 9, in which the seal is an O-ring seal.

11. A casing as in any of claims 8 to 10, in which the hook or hooks include at least one anti-rotation feature (62) which in use engages with a corresponding feature on the casing.

12. A casing as in any preceding claim, in which a layer of sealant is provided on at least part of the radially outer surface of the or each liner panel, to inhibit fretting and vibration.

13. A casing as in claim 12, in which the sealant is a polysulphide.

14. A casing as in any preceding claim, in which the or each mechanical fastener is a threaded fastener.
